# EUROPÄISCHE PATENTSCHRIFT

(11) **EP 0 835 915 B1**
(45) Veröffentlichungstag und Bekanntmachung des Hinweises auf die Patenterteilung: **23.02.2005**
(21) Anmeldenummer: 97116606.1
(22) Anmeldetag: 24.09.1997
(51) Int. Cl.: C09J 7/02, C09J 9/02

(54) **Elektrisch leitfähiges Transfer-Tape**
Electroconductive transfer tape
Ruban de transfert électroconducteur

(30) Priorität: 12.10.1996 DE 19642178
(43) Veröffentlichungstag der Anmeldung: 15.04.1998
(73) Patentinhaber: tesa AG, 20253 Hamburg (DE)
(72) Erfinder: Pfaff, Ronald, Dr., 22335 Hamburg (DE); Meyer, Claus, 21079 Hamburg (DE)

(56) Entgegenhaltungen:
- DE-A- 2 343 483
- US-A- 3 497 383
- US-A- 4 606 962

## Beschreibung

Die Erfindung betrifft die Verwendung eines gesponnenen Vlieses als Trägermaterial für ein elektrisch leitfähiges Transfer-Tape.

Elektrisch leitfähige Transfer-Tapes werden vielfältig bei der Verklebung von elektronischen Kontakten oder bei der elektromagnetischen Abschirmung eingesetzt. Mit ihrer Hilfe werden elektrische Kontakte oder leitfähige, abschirmende (EMV) Flächen miteinander verbunden, ohne den elektrischen Kontakt zu unterbrechen. Für die elektromagnetische Verträglichkeit (EMV) ist z.B. eine lückenlose elektrische Leitfähigkeit des entsprechenden Gehäuses oder Raumes für die Qualität der Abschirmung ausschlaggebend.

Zahlreiche Methoden wurden entwickelt, um elektrische Leitfähigkeit durch die Klebeverbindung zu erzeugen. Geläufige Methoden sind die Zugabe von elektrisch leitenden Metallpulvem oder Kohlenstoffpartikeln zu entsprechenden Kleber- oder Haftkleberrezepturen. Ab einem gewissen Füllgrad der Partikel in der Haftklebemasse kommt es dabei zum Kontakt der elektrisch leitfähigen Partikel untereinander und somit zu einer elektrischen Leitfähigkeit des Klebefilms.

In der US-Patentschrift US 4,113,981 wird beschrieben, wie durch das Zumischen von Kohlenstoffpulver, Metallpulver oder SiC-Pulver eine elektrisch leitfähige Klebemasse hergestellt werden kann. Liegt der Füllgrad bei diesen Stoffen unter 30 Vol.-% wird auch eine selektive Leitfähigkeit der Klebmasse in z-Richtung erreicht, also senkrecht zur Ebene der Klebemasseschicht beziehungsweise des Klebebands.

In WO 95 / 12643 A1 werden elektrisch leitfähige Klebeverbindungen beschrieben, die aus einem porösen Substrat bestehen. Das Substrat besitzt zahlreiche Kanäle, die das Substrat durchdringen. Die Wände der Kanäle sind mit einer einlagigen oder einer zweilagigen Metallschicht versehen, wobei letztere Variante bevorzugt wird. Das Substrat wird anschließend mit einer Klebmasselösung gefüllt und getrocknet. Die porösen Materialien sind poröse Polymerschichten, Gewebe oder Vliese, die mit einer Kupfer/Nickel- oder einer Aluminiumschicht versehen sind.

Weitere Methoden existieren, um eine Leitfähigkeit nur in z-Richtung zu bewirken.

Geläufig ist zum Beispiel die Zugabe von Partikel in der Größe der Dicke der Klebemasseschicht in so geringem Füllgrad, daß diese sich untereinander nicht berühren und somit keine Leitfähigkeit in der Ebene der Kleberschicht erzeugen, jedoch durch ihre Größe einen Kontakt zu beiden Oberflächen des Klebefilms besitzen und somit an diesen Stellen eine elektrische Leitfähigkeit in z-Richtung ermöglichen (anisotrope Leitfähigkeit).

In der US-Patentschrift 5,300,340 ist ein derartiges Transfer-Tape beschrieben. In diesem werden versilberte Glaskugeln oder Metallkugeln in die Klebemasse eingebracht. Der Durchmesser der Kugeln ist dabei mindestens so groß wie die Dicke der Klebemasseschicht. Wird nun Druck auf das Transfer-Tape ausgeübt, beispielsweise beim Verkleben zwischen zwei Körpern, ragen jeweils zu beiden Seiten des Transfer-Tapes die Polkappen der Kugeln aus der Klebemasseschicht und stellen somit den elektrischen Kontakt zwischen den Körpern sicher.

Allerdings treten zahlreiche Probleme bei der Verwendung bekannter elektrisch leitfähiger Transfer-Tapes auf. So ist die Gesamtdicke von geläufigen trägerlosen Transfer-Tapes meist nur 50 µm, selten über 100 µm.
Sowohl bei der Verwendung eines isotrop leitfähigen, als auch bei der eines anisotrop leitfähigen Transfer-Tapes besitzt die Klebemasse nur eine geringfügige Reißfestigkeit und Stabilität, die lediglich durch das Gerüstpolymer des Haftklebers zustande kommt. Die Handhabung des Transfer-Tapes muß dem Rechnung tragen, indem des Transfer-Tape zunächst auf den zu verklebenden Untergrund aufgeklebt und dann von der Trennfolie oder dem Trennpapier getrennt wird. Beim maschinellen oder manuellen Verkleben von Transfer-Tapes kommt es trotz der vorsichtigen Handhabung oft zu Reißern und somit zu Störungen des Fertigungsablaufs.

Aus diesem Grunde werden deshalb elektrisch leitfähige Transfer-Tapes nicht trägerlos, sondern mit einem Zwischenträger verwendet, wenn die isotrope Leitfähigkeit bei der Anwendung derartiger Transfer-Tapes nicht stört. Dazu wird auf beiden Seiten des Stützträger (meist eine Kupferfolie) eine elektrisch leitfähige Klebemasse ausgebracht, die mittels der oben angeführten Prinzipien hergestellt wird. Andere handelsübliche Produkte können auf die Verwendung einer geprägten Kupferfolie verzichten, da der Metallträger so geprägt wird, daß die Prägestellen durch die Klebemasse hindurch ragen. Verständlicherweise besitzen diese Transfer-Tapes eine wesentlich höhere Dicke und ein höheres Gewicht als die trägerlosen Transfer-Tapes, was nicht selten Nachteile bei der Verklebung von kleinen Kontakten mit sich bringt. Zudem wirkt sich die geringere Flexibilität nachteilig bei der Herstellung einer elektrisch leitfähigen Verklebung von Abschirmungsmaterialien auf Gehäusekörpem aus.

Da der Trend zu immer kleineren elektrischen Kontakten geht, die möglichst durch ein Transfer-Tape verklebt werden sollen, werden (auch aus Kostengründen) immer schmalere Transfer-Tapes eingesetzt. Somit werden die Anforderungen an Transfer-Tapes immer höher: Sie müssen bei immer geringerer Breite (zum Beispiel 2 mm Breite), immer geringerer Dicke und immer geringerem Gewicht ausreichend stabil und leicht verarbeitbar sein.

Gleiches gilt beim Einsatz von elektrisch leitfähigen Transfer-Tapes bei der elektromagnetischen Abschirmung von Gehäusen oder Räumen. Hier müssen häufig sehr dünne elektrisch leitfähige Dichtungsprofile mit dem Gehäuse verklebt werden. Dazu sind ebenfalls sehr schmale Transfer-Tapes nötig und darüber hinaus auch wirtschaftlich sinnvoll. Für die elektromagnetische Abschirmung in Flugzeugen sind vor allem sehr leichte Transfer-Tapes zur Verklebung der leitfähigen, abschirmenden Textilien von Interesse.

Aufgabe der Erfindung war es, ein elektrisch leitfähiges Transfer-Tape zu schaffen, das die Nachteile des Stands der Technik nicht oder zumindest nicht in dem Umfange aufweist.

Zur Lösung dieser Aufgabe schlägt die Erfindung als Trägermaterial für ein elektrisch leitfähiges Transfer-Tape die Verwendung eines gesponnenen Vlieses vor, wie es in den Ansprüchen näher gekennzeichnet ist.

Das gesponnene Vlies ist zunächst durch den Auftrag von zumindest einer Metallschicht galvanisiert, vorzugsweise Silber, das mit einem Flächengewicht von 2 g/m² bis 25 g/m², insbesondere 4 g/m² bis 12 g/m² aufgetragen ist, was die isotrope Leitfähigkeit des Transfer-Tapes gewährleistet.

Neben Silber können auch andere Metalle für die Metallschicht Verwendung finden. So eignen sich insbesondere Kupfer und Nickel. Daneben zeigen zweilagige Metallschichten, vorzugsweise Kupfer auf Nickel oder Silber auf Kupfer, die gewünschten Eigenschaften.

Weiterhin ist das Vlies beidseitig mit einer Klebebeschichtung versehen, wobei die mittlere Dicke des Vlieses mindestens so groß ist wie die Summe aus den beiden Dicken der Klebebeschichtungen ist.

Als Trägermaterial für ein elektrisch leitfähiges Transfer-Tape kommt bevorzugt ein gesponnenes Vlies mit einem Flächengewicht von 2 g/m² bis 50 g/m² bis , insbesondere von 5 g/m² bis 15 g/m², sowie mit einer Dicke von 30 µm bis 200 µm, insbesondere von 50 µm bis 150 µm, zum Einsatz.

Das Vlies kann aus Polyamid, Polyester, Polyurethan oder Polyimid bestehen.

Alternativ kann das Vlies nur einseitig mit einer Klebebeschichtung versehen sein.

Als Verfahren zur Herstellung eines erfindungsgemäßen elektrisch leitfähigen Transfer-Tapes findet bevorzugt ein Transferverfahren als Auftragsverfahren für die Klebmassen Verwendung.
Im ersten Schritt werden die Klebmassen zunächst auf eine Folie beschichtet und daran anschließend auf der Folie getrocknet. Dann werden Klebmassen von der Folie auf das gesponnene Vlies aufgebracht, das im Vorfelde mit einem Metall beschichtet wird. Statt einer Folie kann auch ein Trennpapier Verwendung finden.

Auf diese Weise können die Klebmassen in dem vorzugsweise sehr locker gesponnenen Vlies einsinken.
An sehr vielen Stellen beider Oberflächen ragt demnach das Vlies aus der Klebemasse hervor und kann so einen elektrischen Kontakt zur Oberfläche herstellen.

Bei dem nur einseitig mit einer Klebebeschichtung versehenen Transfer-Tape wird zusätzlich die auf das Vlies aufgetragene Klebemasse mittels einer Andruckwalze in das Vlies gedrückt, um zu gewährleisten, daß zumindest teilweise aus der Klebemasse noch die Vliesoberfläche herausragt.

Besonders geeignete Vliese für ein erfindungsgemäßes Transfer-Tape sind sehr dünne, locker und offen gesponnene Vliese, die genügend freies Volumen besitzen, um die Klebemasse aufzunehmen. Bei einem zu dichten Vlies würde die Klebemasse nur auf der Oberseite als kompakte Schicht liegen und zu einer Isolation in z-Richtung führen.

Da herkömmliche, dünne und zudem offene Vliese jedoch nicht mehr stabil sind, werden gesponnene Vliese verwendet, die im Gegensatz zu anderen Vliesen über eine lange Fadenlänge verfügen. Diese Vliese erreichen eine hervorragende Reißfestigkeit und Stabilität auch bei geringsten Dicken und lockerer Spinnqualität, so daß sie als Trägermaterial für ein dimensionsstabiles, elektrisch leitfähiges Transfer-Tape mit hoher Festigkeit und dennoch geringem Gewicht hervorragen geeignet sind. Das gesponnene Vlies ist so stabil, daß es zu einem leicht zu verklebenden Transfer-Tape geringer Breite verarbeitet werden kann.

Die Verwendung eines locker gesponnen Vlieses mit ausreichender Festigkeit bietet somit darüber hinaus wirtschaftliche Vorteile, weil bezogen auf eine Volumeneinheit nur wenige Fäden existieren, und im Gegensatz zu dichten Vliesen oder Geweben nur eine geringe Silbermenge pro Quadratmeter Vlies zur Erzeugung von ausreichend dicken und leitfähigen Silberschichten auf den Fäden notwendig ist.

Durch die Verwendung eines nachträglich versilberten Vlieses anstelle von beispielsweise versilberten Fasern kann neben der verbesserten Stabilität des Produktes auch eine erhöhte Klebkraft erreicht werden:

Der Zusatz von elektrisch leitfähigen Materialien, wie Pulver oder Fasern führt bekanntlich zu Erniedrigung der Klebkraft, weil der erforderliche Füllgrad für eine ausreichende Leitfähigkeit bei bis zu 30 Gew.-% liegen kann. Da diese Partikel auch an die Oberfläche der Kleberschicht ragen, verringern sie die Klebrigkeit des Produktes.
Die Verwendung von oben erwähnten Vliesen bedeutet je nach Qualität des Vlieses ein Anteil von elektrisch leitfähigem Material von nur 10 bis 20 Gew.-% und damit einher gehend eine verbesserte Klebrigkeit.

Durch die Verwendung eines nachträglich metallisierten Vlieses wird auch eine verbesserte Leitfähigkeit des Produktes gegenüber der Verwendung von Fasern oder anderen Zusatzstoffen erreicht, weil ein elektrischer Kontakt nicht durch zufällige Berührung der Teilchen untereinander zustande kommt, sondern durch das gut elektrisch leitfähige Netzwerk vorgegeben ist.

Die Verwendung eines flexiblen Netzwerks bietet zudem Vorteile gegenüber der Verwendung von sphärischen Partikeln als leitfähige Komponenten (z.B. in anisotrop leitfähigen Klebemassen). Wird auf elektrische Kontakte, die durch ein elektrisch leitfähiges Transfer-Tape mit sphärischen Partikeln verklebt sind, ein Druck ausgeübt, kann es zur Beschädigung der leitfähigen Metallschicht auf dem sphärischen Grundkörper (z.B. Glas oder Nickel) führen. Die Silberschicht kann abplatzen.
Durch Verwendung des beschrieben, leitfähigen Vlieses mit seiner Netzstruktur wird ein zu hoher Druck durch die Flexibilität des Netzwerkes abgefedert und eine dauerhafter Kontakt auch bei starker mechanischer Belastung gewährleistet.

Ein weiterer Vorteil der Erfindung beruht auf der Verwendung von Haftklebern, die selbst nicht leitfähig sein müssen. Das ermöglicht eine wirtschaftliche Herstellung von stabilen, elektrisch leitfähigen Transfer-Tapes.
Die Verwendung von zusätzlich elektrisch leitfähigen Klebern mit z.B. versilberten Glas oder Metallkugeln oder anderen Leitfähigen Komponenten ist - wenn es gewünscht wird - dennoch möglich.

Die Dicke der beiden Kleberschichten ist dabei so zu wählen, daß die Summe der beiden Kleberschichten nicht höher ist als die mittlere Dicke des Vlieses, damit das elektrisch leitfähige Vlies noch aus dem Kleber herausragt und nicht vollständig von ihm umgeben ist.

Sie sollte andererseits jedoch auch nicht zu dünn sein, um eine ausreichende Klebkraft des Vlieses zu erreichen. Das ist nicht der Fall, wenn man z.B. ein sehr lockeres Vlies mit einer dünnen Schicht Klebemasse beschichten, und diese zu stark in das Vlies einsinken würde. Beispielsweise sollte bei einem Vlies mit einer Dicke von ca. 90 µm die addierte Dicke der Klebemasseschichten zwischen 10 µm und 90 µm, vorzugsweise zwischen 30 µm und 65 µm liegen.

Das Transfer-Tape kann zur elektrisch leitfähigen Verklebung von elektrischen Kontakten oder von leitfähigen Textilien bei der elektromagnetischen Abschirmung verwendet werden. Durch seine Festigkeit und sein geringes Gewicht eignet es sich besonders für die EMV beim Flugzeugbau.

Im folgenden soll das erfindungsgemäße Transfer-Tape anhand von Beispielen näher läutert werden, ohne damit die Erfindung unnötig einschränken zu wollen.

### Beispiele

### Beispiel 1

Verwendet wird ein versilbertes Vlies der Fa. Statex, das unter dem Handelsnamen "Cerex" ® erhältlich ist. Es handelt sich um ein Nonwoven Fabric aus herkömmlichen Nylon-6.6-Fasern, das mit 6 g/m² Silber beschichtet ist. Die Dicke beträgt 90 µm, das Flächengewicht 16 g/m².
Das Vlies weist weiterhin folgende kennzeichnende Parameter auf:

| | | |
|---|---|---|
| Oberflächenleitfähigkeit (nach ASTM D 257) | | 50 m Ω/inch² |
| | | |
| Reißkraft | in Längsrichtung | größer als 5 N/cm |
| | in Querrichtung | größer als 1 N/cm |
| | | |
| Reißdehnung | in Längsrichtung | größer 30% |
| | in Querrichtung | größer 30% |

Eine Acrylatpolymerlösung, bestehend aus einem Butylacrylat/ Ethylhexylacrylat/Acrylsäurecopolymer, gelöst in einem üblichen Lösemittelgemisch, wird auf eine antiadhäsiv Folie beschichtet und getrocknet, um einen Haftkleber mit einer Schichtdicke von 35 µm zu erzeugen. Diese Haftklebeschicht wird mit dem oben genannten Vlies kaschiert, und das Vlies von der anderen Seite mit einer zweiten Schicht des Haftklebers der selben Dicke kaschiert.

Es entsteht ein elektrisch leitendes Transfer-Tape zwischen zwei Trennfolien, wovon eine entfernt und wieder verwendet wird, weil die andere Trennfolie beidseitig antiadhäsiv behandelt ist, und das Produkt somit auf sich selbst gewickelt wird.

Die Klebkraft des Transfer-Tapes beträgt 6,8 N / cm (gemessen nach ASTM D 1000), der spezifische Durchgangswiderstand 1,1 Ω * cm (gemessen nach ASTM D 2739).

### Beispiel 2

Alle Arbeitsgänge entsprechen denen aus Beispiel 1, allerdings mit dem Unterschied, daß nur eine Schicht Haftkleber auf das Vlies aufgetragen wird. Es wird eine Haftklebeschicht mit einer Dicke von 75 µm hergestellt, auf das Vlies aufgebracht und mittels einer Andruckwalze in das Vlies gedrückt.

Die Klebkraft des Transfer-Tapes beträgt 5,7 N / cm (gemessen nach ASTM D 1000), der spezifische Durchgangswiderstand 1,2 Ω * cm (gemessen nach ASTM D 2739).

## Patentansprüche

1. Verwendung eines gesponnenen Vlieses als Trägermaterial für ein elektrisch leitfähiges Transfer-Tape, wobei
das Vlies durch den Auftrag von zumindest einer Metallschicht galvanisiert ist,
das Vlies beidseitig mit einer Klebebeschichtung versehen ist, wobei die mittlere Dicke des Vlieses mindestens so groß ist wie die Summe aus den beiden Dicken der Klebebeschichtungen ist.

2. Verwendung nach Anspruch 1, wobei als Metallschicht eine Silberschicht verwendet ist, die mit einem Flächengewicht von 2 g/m² bis 25 g/m², insbesondere 4 g/m² bis 12 g/m² aufgetragen ist.

3. Verwendung nach Anspruch 1, wobei als Metallschicht eine Schicht aus Kupfer oder Nickel verwendet ist.

4. Verwendung nach Anspruch 1, wobei als zweilagige Metallschicht bestehend aus Kupfer auf Nickel oder Silber auf Kupfer eingesetzt ist.

5. Verwendung nach Anspruch 1, wobei das Vlies ein Flächengewicht 2 g/m² bis 50 g/m², insbesondere 5 g/m² bis 15 g/m², aufweist.

6. Verwendung nach Anspruch 1, wobei das Vlies eine Dicke von 30 µm bis 200 µm, insbesondere von 50 µm bis 150 µm, aufweist.

7. Verwendung nach Anspruch 1, wobei das Vlies aus Polyamid, Polyester, Polyurethan oder Polyimid besteht.

8. Verfahren zur Herstellung eines elektrisch leitfähigen Transfer-Tapes gemäß den Ansprüchen 1 bis 7, **dadurch gekennzeichnet, daß**
a) das gesponnene Vlies mit einem Metall beschichtet wird,
b) die Klebmassen zunächst auf eine Folie oder ein Trennpapier beschichtet werden,
c) die Klebmassen auf der Folie oder dem Trennpapier getrocknet werden,
d) die Klebmassen abschließend von der Folie oder dem Trennpapier beidseitig auf das Vlies aufgebracht werden.

9. Verfahren zur Herstellung eines elektrisch leitfähigen Transfer-Tapes gemäß dem Anspruch 8, **dadurch gekennzeichnet, daß**
a) das gesponnene Vlies mit einem Metall beschichtet wird,
b) die Klebmasse zunächst auf eine Folie oder ein Trennpapier beschichtet wird,
c) die Klebmasse auf der Folie oder dem Trennpapier getrocknet wird,
d) die Klebmasse abschließend von der Folie oder Trennpapier einseitig auf das Vlies aufgebracht wird,
e) die Klebmasse mittels einer Andruckwalze in das Vlies hinein gedrückt wird.

## Claims

1. Use of a spunbonded nonwoven as backing material for an electroconductive transfer tape, where
the nonwoven is galvanized by the application of at least one layer of metal,
the nonwoven is provided on both sides with an adhesive coating,
the mean thickness of the nonwoven being at least as great as the sum of the two thicknesses of the adhesive coats.

2. Use according to Claim 1, where the layer of metal used is a silver layer which is applied with a basis weight of from 2 g/m² to 25 g/m², in particular from 4 g/m² to 12 g/m².

3. Use according to Claim 1, where the layer of metal used is a layer of copper or nickel.

4. Use according to Claim 1, where a double layer of metal consisting of copper on nickel or silver on copper is employed.

5. Use according to Claim 1, where the nonwoven has a basis weight of from 2 g/m² to 50 g/m², in particular from 5 g/m² to 15 g/m².

6. Use according to Claim 1, where the nonwoven has a thickness of from 30 µm to 200 µm, in particular from 50 µm to 150 µm.

7. Use according to Claim 1, where the nonwoven consists of polyamide, polyester, polyurethane or polyimide.

8. Process for preparing an electroconductive transfer tape according to Claims 1 to 7, **characterized in that**
a) the spunbonded nonwoven is coated with a metal,
b) the adhesive compositions are coated first onto a film or a release paper,
c) the adhesive compositions are dried on the film or release paper, and
d) finally, the adhesive compositions are applied from the film or release paper on both sides to the nonwoven.

9. Process for preparing an electroconductive transfer tape according to Claim 8, **characterized in that** a)the spunbonded nonwoven is coated with a metal,
b) the adhesive composition is coated first onto a film or a release paper,
c) the adhesive composition is dried on the film or release paper,
d) finally, the adhesive composition is applied from the film or release paper on one side to the nonwoven, and
e) the adhesive composition is pressed into the nonwoven by means of a pressing roll.

## Revendications

1. Utilisation d'un non-tissé filé comme matériau support pour une bande de transfert électriquement conductible, où
le non-tissé est galvanisé par l'application d'au moins une couche de métal,
le non-tissé est pourvu des deux côtés par un revêtement adhésif,
l'épaisseur moyenne du non-tissé étant au moins égale à la somme des deux épaisseurs des revêtements adhésifs.

2. Utilisation selon la revendication 1, en appliquant, comme couche de métal, une couche d'argent présentant un poids surfacique de 2 g/m² à 25 g/m², en particulier de 4 g/m² à 12 g/m².

3. Utilisation selon la revendication 1, en utilisant comme couche de métal une couche en cuivre ou en nickel.

4. Utilisation selon la revendication 1, en utilisant une couche de métal à deux couches, une couche de cuivre sur nickel ou d'argent sur cuivre.

5. Utilisation selon la revendication 1, où le non-tissé présente un poids surfacique de 2 g/m² à 50 g/m², en particulier de 5 g/m² à 15 g/m².

6. Utilisation selon la revendication 1, où le non-tissé présente une épaisseur de 30 µm à 200 µm, en particulier de 50 µm à 150 µm.

7. Utilisation selon la revendication 1, où le non-tissé est constitué par du polyamide, du polyester, du polyuréthane ou du polyimide.

8. Procédé pour la préparation d'une bande de transfert électriquement conductible selon les revendications 1 à 7, **caractérisé en ce que**
a) le non-tissé filé est revêtu d'un métal,
b) les masses adhésives sont d'abord révêtues sur une feuille ou un papier de séparation,
c) les masses adhésives sont séchées sur la feuille ou le papier de séparation,
d) les masses adhésives sont finalement appliquées de la feuille ou du papier de séparation sur le non-tissé, des deux côtés.

9. Procédé pour la préparation d'une bande de transfert électriquement conductible selon la revendication 8, **caractérisé en ce que**
a) le non-tissé filé est revêtu d'un métal,
b) la masse adhésive est d'abord revêtue sur une feuille ou un papier de séparation,
c) la masse adhésive est séchée sur la feuille ou le papier de séparation,
d) la masse adhésive est finalement appliquée de la feuille ou du papier de séparation sur le non-tissé, d'un côté,
e) la masse adhésive est enfoncée dans le non-tissé au moyen d'un cylindre de compression.
